# EUROPEAN PATENT SPECIFICATION

(11) **EP 2 995 839 B1**
(45) Date of publication and mention of the grant of the patent: **07.08.2019**
(21) Application number: 14795384.8
(22) Date of filing: 24.03.2014
(51) Int. Cl.: F16L 33/22, F16L 47/04, F16L 19/028, F16L 13/14, F16L 15/08, F16L 19/04

(54) **PIPE CONNECTING DEVICE**
ROHRVERBINDUNGSVORRICHTUNG
DISPOSITIF DE RACCORDEMENT DE TUYAUX

(30) Priority: 08.05.2013 JP 2013098314
(43) Date of publication of application: 16.03.2016
(73) Proprietor: NIPPON PILLAR PACKING CO., Ltd., Nishi-ku, Osaka-shi Osaka 550-0013 (JP)
(72) Inventor: FUJII Makoto, Osaka-shi Osaka 532-0022 (JP); IIDA Toshihide, Osaka-shi Osaka 532-0022 (JP)
(74) Representative: Fleuchaus, Michael A.
(86) International application number: PCT/JP2014/058004
(87) International publication number: WO 2014/181592

(56) References cited:
- EP-A1- 1 046 853
- EP-A2- 0 915 283
- WO-A1-00/28254
- FR-A1- 2 253 182
- GB-A- 1 277 718
- JP-A- H1 054 489
- JP-A- H03 168 495
- JP-A- H05 240 386
- JP-A- H11 257 572
- JP-U- H0 614 674
- JP-U- S5 284 014
- JP-U- S50 109 214

## Description

### Technical Field

The present invention relates to a pipe-connecting device of the type which uses an inner ring, and more particularly to a pipe-connecting device which is preferred in piping for a liquid having high purity or ultrapure water that is handled in various technical fields such as production of semiconductor devices, production of medical equipment and medicines, food processing, and chemical industry.

A pipe-connecting device using an inner ring is configured by: a tubular screwing portion which is projected from a pipe joint body or a fluid apparatus in a state where an external thread is formed on the outer circumference; a seal inner ring in which an annular large-diameter portion is raised on the radially outward side; and a union nut in which an internal thread to be screwed with the external thread is formed. For example, the pipe-connecting device disclosed in Patent Literature 1 is known.

The pipe-connecting device disclosed in Patent Literature 1 includes: a tubular screwing portion which is disposed in a pipe joint body in a state where an external thread is formed on the outer circumference; an inner ring in which an inner circumferential portion is formed as a fluid passage, and an annular large-diameter portion is raised on the radially outward side, and which is used for fixing a pipe; and a union nut in which an internal thread to be screwed with the external thread is formed.

In the above-described pipe-connecting device, when a tube is to be connected to the pipe joint body, the inner ring is firstly press-inserted into an end portion of the tube from an opening of the tube, and the end portion of the tube is flared and deformed by the annular large-diameter portion. Next, the tube which is flared and deformed, and which has the inner ring is inserted into the tubular screwing portion.

Next, the internal thread of the union nut is screwed with the external thread of the tubular screwing portion. Then, the union nut is fastened and crew-advanced, and this screw advancement causes the union nut to press the tube having the inner ring in the axial direction, thereby performing the connection of the tube.

In a pipe-connecting device such as the above-described one, means was employed which is based on the concept that the union nut is turned and fastened to strongly press the flared portion of the tube in the axial direction to a degree by which the portion is recessed, by the seal pressing portion (see the pressing edge 3C in Patent Literature 1) that is a pointed place, thereby performing a sealing function.

Patent Literature 2 discloses a screwed coupling for a flexible pipe. It consists essentially of three parts. The first part is an adaptor with a male thread and a hexagonal portion for tightening. The inside bore of the adaptor is shaped into a cone at one end. The second part is an olive which fits inside the end of the plastics tube. The outside of the olive is grooved with three grooves, which form a seal with the plastics tube. The third part is a tightening nut with a female thread. When the coupling is tightened there is a certain amount of deformation in the plastics tube to form the joint.

In a pipe-connecting device having such means, in order to realize the seal performance and the security against the slipping off of the tube, a strong fastening work using a tool is required. Therefore, there are difficulties such as a large burden on the worker, a difficulty of a work in a confined space, and occurrence of working variation. In some cases, there is a possibility that the performance may be affected by insufficient fastening.

Moreover, strong fastening causes large stress to be applied to various portions, and the deformation is increased. In order to prevent loosening due to a long-term use or a use at a high temperature from occurring, therefore, a refastening operation is sometimes performed. In the case where detachment or reconstruction is performed in accordance with component replacement or maintenance, it is necessary to conduct the fastening operation at a degree which is higher than that of the previous fastening operation.

In a conventional pipe-connecting device, therefore, there remains room for improvement in repeated uses, such as that the fastening position or the number of uses is often limited, and that, in a place where detachment is frequently performed, component replacement must be immediately performed.

### Prior Art Literature

### Patent Literature

Patent Literature 1: Japanese Patent Application Laid-Open No. 10-054489
Patent Literature 2: French Patent FR2253182

### Summary of the Invention

### Problems to be Solved by the Invention

It is an object of the invention to provide a pipe-connecting device which is of the type using an inner ring, and which, while maintaining a satisfactory seal performance, is improved so as to be repeatedly used times larger than those in the conventional art, by revising the structure.

### Means for Solving the Problems

In the invention of claim 1, a pipe-connecting device in which the device includes:an inner ring 3 having:
an outer circumferential portion 3G in which a tip-contracted outer-circumferential flared surface 3a is insertable from a tip end into a tube end portion 4C of a fluid transfer tube 4 made of a resin to flare the tube end portion 4C is formed at a tip end; and an inner circumferential portion 3w constituting a fluid transfer path;a pipe joint body 1 or fluid apparatus that has a tubular screwing portion 1A in which an external thread 7 is formed on an outer circumference; and a union nut 2 in which an internal thread 13 that is to be screwed with the external thread 7 is formed,the inner ring 3 being insertable into the tubular screwing portion 1A in a state where the tube end portion 4C is flared, and the tip-contracted outer-circumferential flared surface 3a is pressable against the union nut 2 which is screwable with the external thread 7, with the tube 4 clamped, the pipe-connecting device being connectable to the tube 4, characterized in that a tube pressing portion 12b which is in the union nut 2, configured to press the tube 4 against the tip-contracted outer-circumferential flared surface 3a is formed into an inclined inner circumferential surface which is inclined in a same direction as the tip-contracted outer-circumferential flared surface 3a with respect to an axis Y of the tubular screwing portion 1A, and the tip-contracted outer-circumferential flared surface 3a forms a convex curved surface in which the whole is convex radially and outwardly in an axis P direction of the inner ring 3, as a press-contact portion configured to make the tip-contracted outer-circumferential flared surface 3a be in contact with the inner circumferential portion of the tube end portion 4C, prior to fastening of the union nut 2, between the tip-contracted outer-circumferential flared surface 3a and the inner circumferential portion of the tube end portion 4C, wherein an angle Θ of the inclined inner circumferential surface with respect to the axis Y is set to be larger than an angle α formed by a straight line L3 connecting a place a where the pressing fitting portion M, in which the tip-contracted outer-circumferential flared surface 3a is in close contact with the tube end portion 4C, has the maximum diameter and a place c where the tip-contracted outer-circumferential flared surface 3a has the minimum diameter, and the axis Y.

In the invention of claim 2, in the pipe-connecting device of claim 1, it is characterized in that
the outer circumferential portion 3G of the inner ring 3 includes a base-contracted outer diameter-contracted circumferential surface 3c which is formed in a place that is on a side of a basal end with respect to the tip-contracted outer-circumferential flared surface 3a, in order to diameter-contract the tube end portion 4C which is flared by the tip-contracted outer-circumferential flared surface 3a,
a seal element portion y is formed in a basal end portion of the inner ring 3, a seal forming portion k corresponding to the seal element portion y is formed in the pipe joint body 1 or the fluid apparatus 1, and,
in an assembled state in which the tube pressing portion 12b is pressed against the tip-contracted outer-circumferential flared surface 3a through the tube 4 by screw advancement of the tubular screwing portion 1A of the union nut 2 in a direction of the axis Y, the screw advancement being caused by screwing the internal thread 13 with the external thread 7 in a state where the inner ring 3 in which the tube end portion 4C is fitted onto the tip-contracted outer-circumferential flared surface 3a and the base-contracted diameter-contracted outer circumferential surface 3c is inserted into the tubular screwing portion 1A, the seal element portion y and the seal forming portion k are pressed against each other, and a diameter-contracted tube portion 4c which is in the tube end portion 4C, and which is fitted onto the base-contracted diameter-contracted outer circumferential surface 3c, and the tubular screwing portion 1A are pressed against each other by a contact pressure which is lower than a contact pressure between the seal element portion y and the seal forming portion k, or separated from each other.

In the invention of claim 3, in the pipe-connecting device of claim 2, it is characterized in that
a tip-end inner circumferential surface 8 which is in the tubular screwing portion 1A, and which is opposed to the diameter-contracted tube portion 4c is formed into a tip-expanded inner circumferential surface in which a uniform or substantially uniform gap is formed between the tip-end inner circumferential surface 8 and an outer circumferential surface of the diameter-contracted tube portion 4c.

In the invention of claim 4, in the pipe-connecting device of claim 2, it is characterized in that
the seal forming portion k includes a tapered outer circumferential surface 18 or tapered inner circumferential surface 5 which is inclined with respect to the axis Y, and the seal element portion y includes an inclined inner circumferential surface 20 which is fitted onto the tapered outer circumferential surface 18, or an inclined outer circumferential surface 11 which is fitted into the tapered inner circumferential surface 5.

In the invention of claim 5, in the pipe-connecting device of claim 2, it is characterized in that
the seal forming portion k includes an annular groove m or/and cylindrical part 27 which is formed in parallel to the axis Y, and the seal element portion y includes a cylindrical portion 14 that is press-inserted into the annular groove m, or/and an annular groove portion 28 into which the cylindrical part 27 is press-inserted.

### Effects of the Invention

According to the invention of claim 1, by fastening (screw advancement) caused by turning of the union nut, the pressing portion is caused to axially press a portion which is in the end portion of the tube, and which is fitted onto the outer-circumferential flared surface. The pressing portion is an inclined inner circumferential surface which is inclined in the same direction as the outer-circumferential flared surface, and configured so as to press the tube by a wide surface. According to the configuration, the pressing force (surface pressure) by which the tube is pressed can be explicitly reduced as compared with the conventional configuration where local pressing is performed by a pointed edge. Therefore, it is possible to reduce the creep phenomenon.

In a pipe-connecting device having a structure where a tube which is forcedly fitted onto an inner ring is fitted into a pipe joint body, a satisfactory seal performance is originally provided. Therefore, it has been known that there is no distinct difference in seal performance between the conventional configuration in which the pressing portion of the union nut is pointed and pressed against a tube while biting thereinto, and the configuration of the application in which the whole of a tube is pressed by the wide inclined inner circumferential surface. According to the configuration of claim 1 in which measures to avoid stress concentration and reduce the surface pressure are taken, therefore, the deformation and creep of a tube can be reduced, and it is possible also to distinctly increase the number of repeated uses due to refastening operations.

As a result, it is possible to provide a pipe-connecting device which is of the type using an inner ring, and which, while maintaining a satisfactory seal performance, can be improved so as to be repeatedly used times larger than those in the conventional art, and prolong the life period, by revising the structure.

According to the invention of claim 2, in an assembled state where the union nut is fastened, the diameter-contracted tube portion and the tubular screwing portion are not butted against each other or are butted against each other at a low contact pressure, and therefore a state where the seal element portion of the inner ring, and the seal forming portion of the pipe joint body or the fluid apparatus are surely press-contacted with each other and sealing is achieved.

If, in accordance with the fastening of the union nut, the tubular screwing portion and the diameter-contracted tube portion which is fitted onto the base-contracted diameter-contracted outer circumferential surface are hit each other before the seal element portion and the seal forming portion are butted against each other, the seal element portion and the seal forming portion are not butted against or lightly contacted with each other in the assembled state, and the tubular screwing portion and the diameter-contracted tube portion which is fitted onto the base-contracted diameter-contracted outer circumferential surface are strongly press-contacted with each other. Therefore, there is a possibility that the seal due to the press contact between the seal element portion and the seal forming portion does not function. This is inconvenient.

According to the invention of claim 2, the diameter-contracted tube portion and the tubular screwing portion are pressed against each other by a contact pressure which is lower than the contact pressure between the seal element portion and the seal forming portion, or separated from each other. Therefore, the seal element portion and the seal forming portion are surely/satisfactorily press-contacted with each other, thereby producing a sealing function.

As a result, in addition to the effects of the invention of claim 1, also an effect that a seal portion due to the basal end portion of the inner ring and the pipe joint body satisfactorily functions, the tip-end portion of the inner ring is not excessively diameter-contracted and deformed, and further improvements can be made is achieved.

According to the invention of claim 3, a uniform or substantially uniform gap is formed between the tip-expanded inner circumferential surface [a tip-end inner circumferential surface which is opposed to (i.e., outwardly surrounds) the diameter-contracted tube portion] which is the tip-end inner circumferential surface of the tubular screwing portion, and the outer circumferential surface of the diameter-contracted tube portion. As compared with the case where the both surfaces are lightly press-contacted with each other, therefore, the seal element portion and the seal forming portion are more surely and strongly press-contacted with each other. Therefore, there is an advantage that the above-described effects of the invention of claim 1 and those of the invention of claim 2 are enhanced.

Moreover, the seal element portion and the seal forming portion can have a configuration where, as in the invention of claim 4, the seal element portion is configured by an inclined inner circumferential surface or an inclined outer circumferential surface, and the seal forming portion is configured by a tapered outer circumferential surface or a tapered inner circumferential surface, or that where, as in the invention of claim 5, the seal element portion is configured by a cylindrical portion or an annular groove portion, and the seal forming portion is configured by an annular groove or a cylindrical part.

### Brief Description of the Drawings

Fig. 1 is a sectional view of main portions showing a pipe-connecting device in a fastened state (Embodiment 1).
Fig. 2 is a partially fragmentary side view showing an inner ring.
Fig. 3 is a partially fragmentary side view showing a union nut.
Fig. 4 is a partially fragmentary side view showing a pipe joint body.
Fig. 5 is a sectional view of main portions showing a pipe-connecting device not forming part of the invention and having a first other structure (Embodiment 2).
Fig. 6(a) is a sectional view showing a state of a naturally contracted inner-circumferential flared surface of an inner circumferential portion of an end portion of the tube which appears as a result of that an end portion of the tube is flared and deformed by using a column that is formed so as to have the same diameter as a maximum-diameter portion of the inner ring, and Fig. 6(b) is an enlarged sectional view in the case where a tip-contracted outer-circumferential flared surface of the inner ring is press-inserted into the end portion of the tube to be flared and deformed.
Fig. 7 is an enlarged sectional view showing main portions of a first seal portion.
Fig. 8 is a sectional view of main portions showing a pipe-connecting device having a second other structure (Embodiment 3).
Fig. 9 is a sectional view of main portions showing a pipe-connecting device having a third other structure (Embodiment 4).

### Mode for Carrying Out the Invention

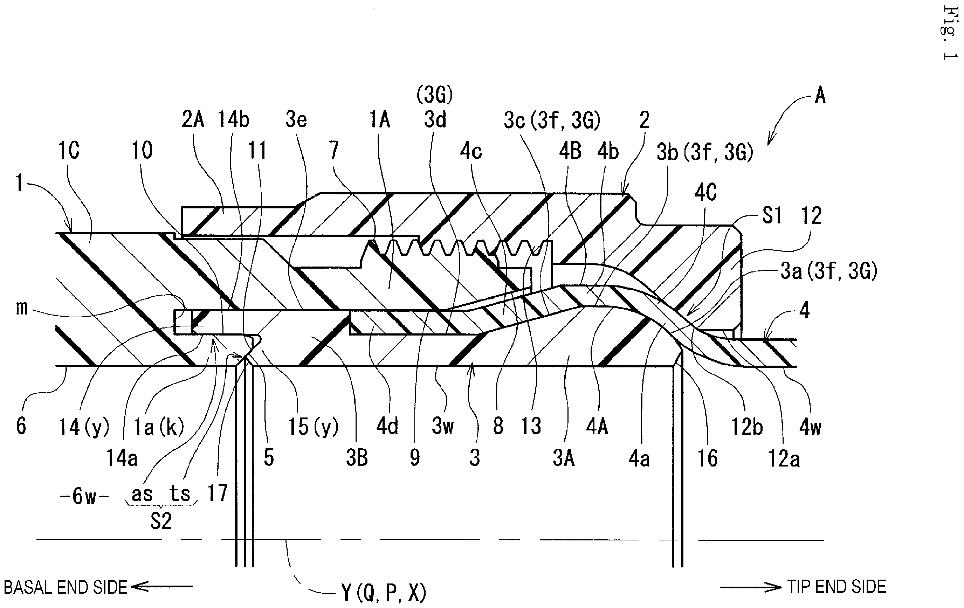

Hereinafter, embodiments of the pipe-connecting device of the invention will be described with reference to the drawings. In a pipe-connecting device A shown in Figs. 1, 5, and 8 and in an assembled state, four axes, i.e., the axis Y of a pipe joint body 1, the axis Q of a union nut 2, the axis P of an inner ring 3, and the axis X of a tube 4 are drawn so that they are identical ones arranged on the same straight line (the axis Y = the axis Q = the axis P = the axis X).

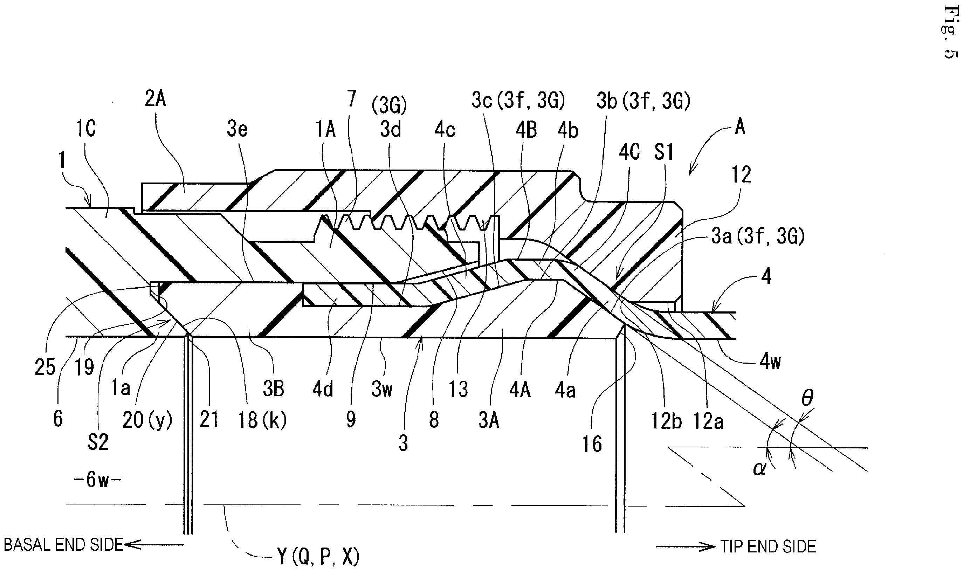

In the specification, it is defined that "tip end side" and "tip end" in components or the pipe joint body 1, the union nut 2, the inner ring 3, and the tube 4 indicate the side (or the direction) in which the tube 4 separates from the pipe joint body 1 in the direction of the axis Y in Figs. 1 and 5, and the like, and "basal end side" and "basal end" indicate the side (or the direction) in which the tube 4 approaches the pipe joint body 1 in the direction of the axis Y. The term "or/and" is defined to include both "or" and "and".

### [Embodiment 1]

As shown in Fig. 1, the pipe-connecting device A is configured by a pipe joint through which tubes are connected to each other, has the pipe joint body 1, the union nut 2, and the inner ring 3, and is used for communi-catingly connecting the tube 4 in a state where the inner ring body 3A of the inner ring 3 is press-inserted from a tip end portion into a tube end portion 4C. All of the pipe joint body 1, the union nut 2, the inner ring 3, and the tube 4 are made of a resin such as a fluorine resin (for example: PTFE, PFA, ETFE, CTFE, or ECTEF) having excellent heat resistance and chemical resistance.

When the pipe joint body 1, the inner ring 3, and the tube 4 are made of the above-mentioned fluorine resin, the union nut 2 may be formed by a resin such as polyamide, polypropylene, or polyethylene. All of the pipe joint body 1, the union nut 2, the inner ring 3, and the tube 4 may be formed by a resin such as polyamide, polypropylene, or polyethylene.

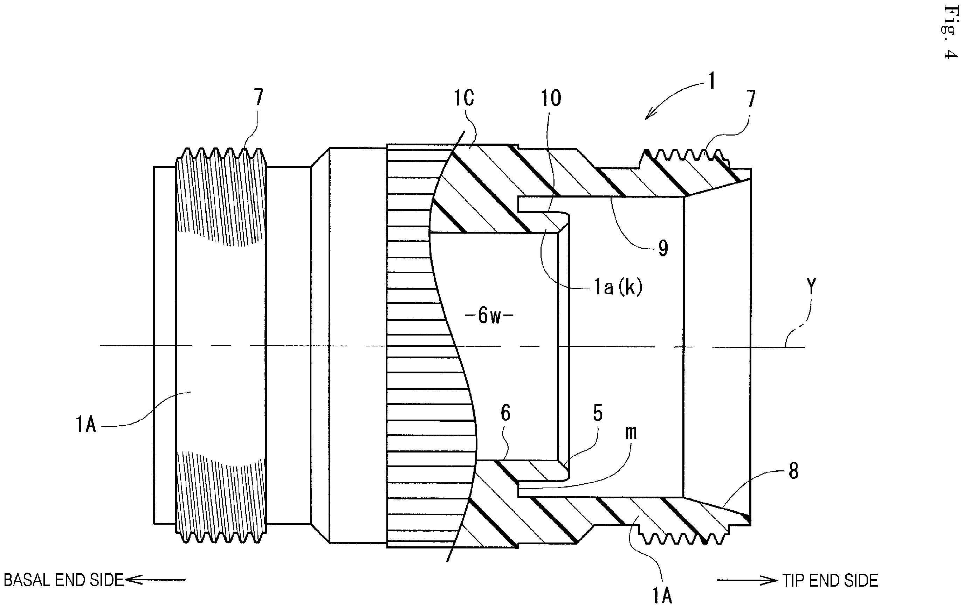

As shown in Figs. 1 and 4, the pipe joint body 1 has a tubular structure having: a tubular trunk portion 1C; a tubular screwing portion 1A which is disposed in its tip end side in the direction of the axis Y; a small-diameter tubular portion 1a which is formed on the radially inward side on the root portion of the tubular screwing portion 1A; and an inner circumferential surface 6 which constitutes an internal flow path 6w. Although not illustrated, for example, the pipe joint body is formed into a component having a shape which, also in the basal end side of the trunk portion 1C, has a tubular screwing portion 1A and a small-diameter tubular portion 1a, and which is symmetrical in the axial direction.

In the tubular screwing portion 1A, an external thread 7 is formed from the outer circumference of its tip end portion toward the basal end side, a tip-expanded inner circumferential surface [tip-end inner circumferential surface which is opposed to (i.e., outwardly surrounds) the diameter-contracted tube portion 4c in the tubular screwing portion 1A] 8 is formed on the inner circumference of its tip end portion, and a linear inner circumferential surface 9 having a constant diameter is formed on the basal end side of the inner circumferential surface 8.

A linear outer circumferential surface 10 having a constant diameter is formed on the radially outward side of the small-diameter tubular portion 1a, and an inclined inner circumferential surface (an example of "tapered outer circumferential surface") 5 having a tip-expanded shape in which the diameter is gradually increased as further advancing toward the tip end side of the small-diameter tubular portion 1a is formed in a tip end portion on the radially inward side of the small-diameter tubular portion 1a.

A tubular annular groove m is formed between the outer circumferential surface 10 of the small-diameter tubular portion 1a and the inner circumferential surface 9 of the tubular screwing portion 1A.

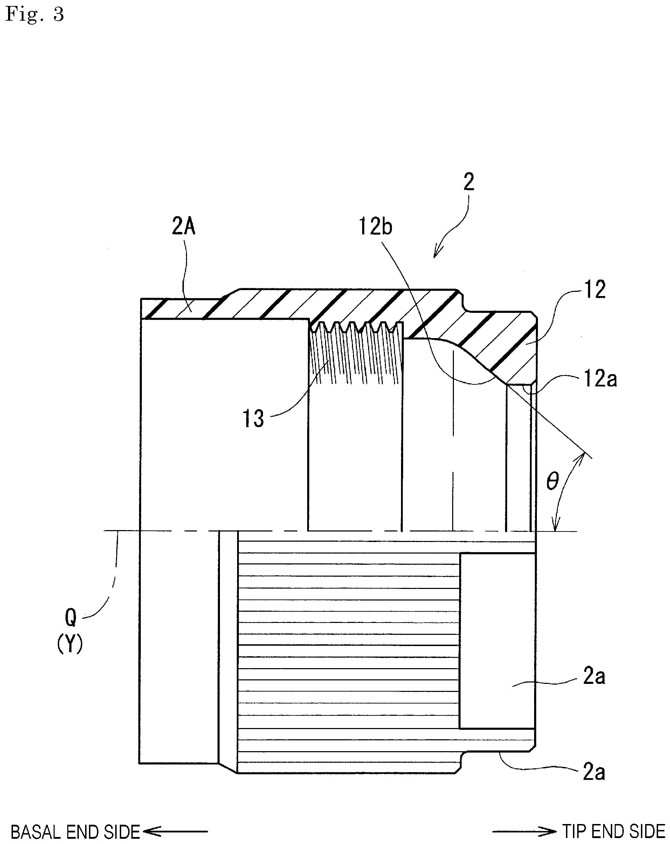

As shown in Figs. 1 and 3, the union nut 2 is configured by a resin-made nut, and, in an inner circumferential portion, has an internal thread 13 which is screwed with the external thread 7 of the tubular screwing portion 1A, and an annular flange portion 12 which is located on the tip end side with respect to the internal thread 13, and which projects toward the radially inner side.

The inner diameter portion of the flange portion 12 is set as an inner circumferential surface 12a in which the diameter is slightly larger than the outer diameter of the tube 4 so that the tube 4 can pass therethrough. The basal end side of the flange portion 12 is configured as a tube pressing portion 12b that presses the tip-end side outer circumferential surface of the tube end portion 4C into which the inner ring 3 is press-inserted, in the direction of the axis Q of the union nut 2. In the outer circumference of the flange portion 12, six cut-shaped flat surfaces 2a which exhibit a substantially hexagonal shape as seen in the direction of the axis Q are formed so that turning by a spanner (wrench) is enabled.

The tube pressing portion 12b is formed as an inclined inner circumferential surface in which the base is widened so that the diameter is further increased as further approaching toward the side (basal end side) of the internal thread 13 in the direction of the axis Q. Specifically, the tube pressing portion 12b of the union nut 2 which clamps and presses the tube 4 with a tip-contracted outer-circumferential flared surface 3a of the inner ring 3 is formed into an inclined inner circumferential surface which is inclined in the same direction as the tip-contracted outer-circumferential flared surface 3a with respect to the axis Q.

When the internal thread 13 is screwed with the external thread 7 of the tubular screwing portion 1A and the union nut 2 is screw-advanced, the tube pressing portion 12b presses the tip-end side outer circumferential surface of the tube end portion 4C of the tube 4 in the direction of the axis Q. The inner circumferential surface 12a of the flange portion 12 has a constant inner diameter, but may be formed into a tapered inner circumferential surface in which the inner diameter is gradually further increased as further separating from the internal thread 13.

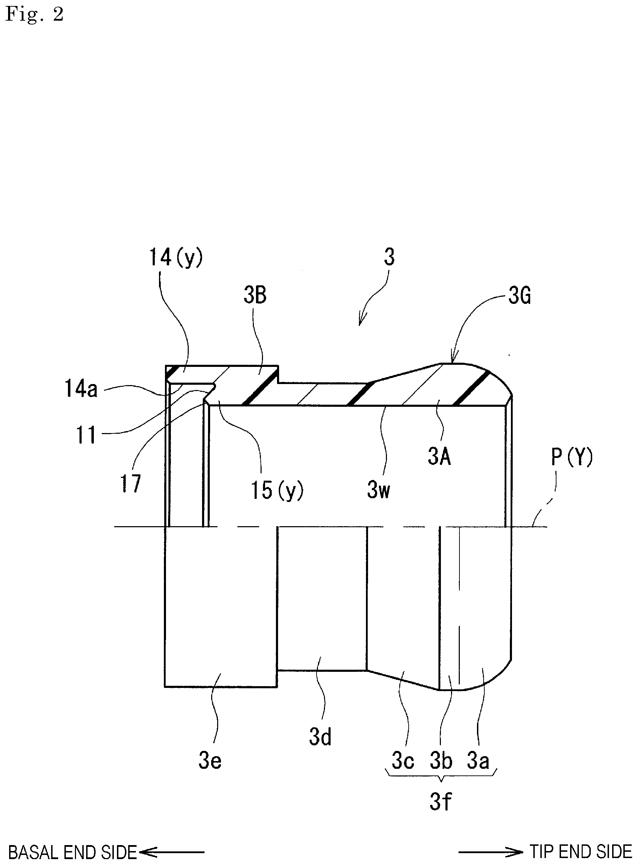

As shown in Figs. 1 and 2, the inner ring 3 is configured as a tubular member which has the inner ring body 3A that is press-inserted into the tube end portion 4C from an opening of the tube 4, and a fitting tubular portion 3B that is on the basal end side of the inner ring body 3A, and that projects from the opening of the tube 4 toward the basal end, and which has the axis P.

Inner circumferential portions 3w of the inner ring body 3A and the fitting tubular portion 3B are formed so as to have a constant diameter, and configured as a fluid passage.

In a tip end side of an outer circumferential portion 3G of the inner ring body 3A, a flared portion 3f is formed, and the tip-contracted outer-circumferential flared surface 3a is formed in the tip end side of the flared portion 3f. In the basal end side of the flared portion 3f, a base-contracted diameter-contracted outer circumferential surface 3c in which the diameter is further reduced as further advancing toward the basal end is formed. A maximum-diameter portion 3b which is a portion having the largest diameter is formed between the base-contracted diameter-contracted outer circumferential surface 3c and the tip-contracted outer-circumferential flared surface 3a. Then, a trunk outer-circumferential portion (trunk outer-circumferential surface) 3d having a constant outer diameter is formed on the side of the base end of the base-contracted diameter-contracted outer-circumferential surface 3c.

In the drawings of the application, the maximum-diameter portion 3b of the inner ring 3 is drawn to have a structure including a constant length in the direction of the axis P. Even in a structure corresponding to a boundary in which the maximum-diameter portion 3b is immediately changed to the tip-contracted outer-circumferential flared surface 3a and the base-contracted diameter-contracted outer circumferential surface 3c, there is no technical difficulty.

The tip-contracted outer-circumferential flared surface 3a of the flared portion 3f is formed into a convex curved surface in which the whole is radially outwardly convex, the maximum-diameter portion 3b is formed in the basal end side of the tip-contracted outer-circumferential flared surface 3a, and the tip-contracted outer-circumferential flared surface 3a and the maximum-diameter portion 3b are press-inserted into the tube end portion 4C, whereby the tube end portion 4C is deformed in a flared manner.

In a tip end portion of the tip-contracted outer-circumferential flared surface 3a, a base-contracted cut-shaped deformation preventing portion 16 is formed in which the diameter is further reduced as further advancing toward the basal end of the axis P of the inner ring body 3A. The deformation preventing portion 16 can substantially suppress or prevent a tip end portion of the flared portion 3f from, after the tip-contracted outer-circumferential flared surface 3a is press-inserted into the tube end portion 4C, diameter-reducing, deforming, and projecting in the radial inward direction (toward the fluid passage).

Furthermore, the deformation preventing portion 16 can prevent or suppress the tip end side of the tip-contracted outer-circumferential flared surface 3a from being further deformed and projected in the radial inward direction (toward the fluid passage) by the force and speed of the flow of the fluid.

In the fitting tubular portion 3B, a projecting cylindrical portion 14 which is press-inserted into the annular groove m of the pipe joint body 1, and an annular small projection 15 which is located in the radial inward side of the projecting cylindrical portion 14, and which includes an inclined outer circumferential surface 11 are formed. In a basal end portion of the annular small projection 15, a tip-contracted cut-shaped deformation preventing portion 17 is formed in which the diameter is further reduced as further advancing toward the tip end of the axis P of the inner ring body 3A. The deformation preventing portion 17 can prevent the tip end side of the annular small projection 15 from deforming and projecting in the radial inward direction (toward the fluid passage).

The portion between the base-contracted inclined outer circumferential surface 11 of the annular small projection 15 and the inner circumferential surface 14a of the projecting cylindrical portion 14 is formed into an annular recess in which the base is expanded, and configured so that a tip end portion of the small-diameter tubular portion 1a of the pipe joint body 1 is fitted into the recess, and this fitting causes the inclined outer circumferential surface 11 of the annular small projection 15 and the inclined inner circumferential surface 5 of the small-diameter tubular portion 1a to be butted against each other.

In the tube 4, as shown in Fig. 1, the end portion 4C which is a basal end portion of the tube is press-fitted onto the inner ring body 3A. Because of this, a tip-contracted press contact portion 4a which is press-contacted with the tip-contracted outer-circumferential flared surface 3a, a maximum flared press-contact portion 4b which is press-contacted with the maximum-diameter portion 3b, a tip-expanded press-contact portion 4c which is press-contacted with the base-contracted diameter-contracted outer circumferential surface 3c, and a trunk press-contact portion 4d which is press-contacted with the trunk outer circumferential portion 3d are formed in the end portion 4C.

In the state where the tube 4 is press-inserted into the inner ring 3, the diameter of an internal flow passage 4w configured by the inner circumferential surface 4A of the tube 4, that of the inner circumferential portion 3w constituting the fluid passage of the inner ring 3, and that of the inner circumferential surface 6 constituting the internal passage 6w of the pipe joint body 1 are set to have the same dimension and to be flush. However, the state is not limited to this.

In the tube 4, after the inner ring body 3A is press-inserted into the tube end portion 4C, the tube 4 having the inner ring is inserted and disposed into the tubular screwing portion 1A. As shown in Fig. 1, then, the internal thread 13 of the union nut 2 is screwed with the external thread 7 of the tubular screwing portion 1A of the pipe joint body 1, and then turned in the fastening direction, thereby causing the union nut 2 to be screw-advanced toward the basal end along the axis Y (the axis Q in Fig. 3), and the tube pressing portion 12b of the union nut 2 to press the tip-end side outer circumferential surface (outer circumferential surface of the tip-contracted press-contact portion 4a) of the tube end portion 4C in the direction of the axis Y (the axis Q in Fig. 3) .

This pressing causes the projecting cylindrical portion 14 of the inner ring 3 to be press-inserted into the annular groove m of the pipe joint body 1, and the inclined outer circumferential surface 11 of the inner ring 3 to be butted against and press-contacted with the inclined inner circumferential surface 5 of the pipe joint body 1. Alternatively, the pressing causes the projecting cylindrical portion 14 which is light pushed into the annular groove m by the insertion of the tube 4 having the inner ring into the tubular screwing portion 1A, to be further forcedly pushed and press-inserted, and the inclined outer circumferential surface 11 of the inner ring 3 to be butted against and press-contacted with the inclined inner circumferential surface 5 of the pipe joint body 1.

When, as described above, the union nut 2 is fastened in a state where the tube 4 having the inner ring 3 is inserted into the tubular screwing portion 1A, and the pipe-connecting device A is set to a connection state (assembled state), a first seal portion S1 and a second seal portion S2 are formed.

That is, the first seal portion S1 is formed by press contact between the tip-contracted press-contact portion 4a of the tube 4 and the tip-contracted outer-circumferential flared surface 3a of the inner ring body 3A.

By the press insertion between the inner ring 3 and the tube 4, the maximum flared press-contact portion 4b of the tube 4 and the maximum-diameter portion 3b of the inner ring body 3A are press-contacted with each other, the diameter-contracted tube portion 4c of the tube 4 and the base-contracted diameter-contracted outer circumferential surface 3c of the inner ring body 3A are press-contacted with each other, and the trunk press-contact portion 4d of the tube 4 and the trunk outer circumferential portion 3d of the inner ring body 3A are press-contacted with each other. These press contact states between the tip-contracted press-contact portion 4a and the tip-contracted outer-circumferential flared surface 3a, the maximum flared press-contact portion 4b and the maximum-diameter portion 3b, the diameter-contracted tube portion 4c and the base-contracted diameter-contracted outer circumferential surface 3c, and the trunk press-contact portion 4d and the trunk outer circumferential portion 3d are sometimes enhanced by fastening of the union nut 2.

The second seal portion S2 is a seal portion configured by a press-insertion seal portion as on the side of the outer circumferential side, and a butt seal portion ts on the side of the inner circumferential side.

The press-insertion seal portion as is a seal portion formed by: press contact between the outer circumferential surface of the fitting tubular portion 3B of the inner ring 3, specifically, an outer circumferential surface 14b of the projecting cylindrical portion 14 (an example of the seal element portion y) and the inner circumferential surface 9 (an example of the seal forming portion k) in the basal end side of the tubular screwing portion 1A of the pipe joint body 1; and that between the inner circumferential surface of the fitting tubular portion 3B, specifically, the inner circumferential surface 14a of the projecting cylindrical portion 14 (an example of the seal element portion y) and the outer circumferential surface 10 of the small-diameter tubular portion 1a (an example of the seal forming portion k) of the pipe joint body 1.

The butt seal portion ts is a seal portion formed by press contact due to mutual pressing in the direction of the axis Y between the inclined outer circumferential surface 11 of the annular small projection 15 (an example of the seal element portion y) of the inner ring 3, and the inclined inner circumferential surface 5 of the small-diameter tubular portion 1a of the pipe joint body 1.

When the first seal portion S1 and the second seal portion S2 are configured, the fluid flowing through the tube 4, the inner ring 3, and the pipe joint body 1 is prevented from, due to entering contact surfaces of the tube 4 and the inner ring 3 or those of the inner ring 3 and the pipe joint body 1, leaking from between the tubular screwing portion 1A of the pipe joint body 1 and the tube end portion 4C, and a perfect seal is attained.

In the assembled state, as shown in Fig. 1, it is configured so that the tip-expanded inner circumferential surface 8 of the pipe joint body 1 and the diameter-contracted tube portion 4c of the tube 4 are caused to form a gap and not to butt against each other by the dimension setting and the like. This provides a state where the inclined outer circumferential surface 11 and the inclined inner circumferential surface 5 are surely press-contacted with each other, and the butt seal portion ts, i.e., the second seal portion S2 surely functions.

If, in accordance with the fastening of the union nut 2, the tip-expanded inner circumferential surface 8 and the diameter-contracted tube portion 4c are hit each other before the inclined outer circumferential surface 11 and the inclined inner circumferential surface 5 are butted against each other, the inclined outer circumferential surface 11 and the inclined inner circumferential surface 5 are not butted against each other or lightly contacted with each other in the assembled state, and the tip-expanded inner circumferential surface 8 and the diameter-contracted tube portion 4c are strongly press-contacted with each other. Therefore, there is a possibility that the butt seal portion ts (second seal portion S2) does not function. This is disadvantageous.

In the invention, therefore, the diameter-contracted tube portion 4c and the tubular screwing portion 1A have the configuration where they are pressed against each other at a contact pressure which is lower than that between the seal element portion y and the seal forming portion k, or, as in the embodiment, separated from each other. Therefore, the butt seal portion ts (second seal portion S2) surely/satisfactorily functions.

The first seal portion S1, specifically, a tip-end press-contact portion which is the press-contact portion between the tip-contracted press-contact portion 4a of the tube 4 and the tip-contracted outer-circumferential flared surface 3a of the inner ring body 3A is configured in the following manner.

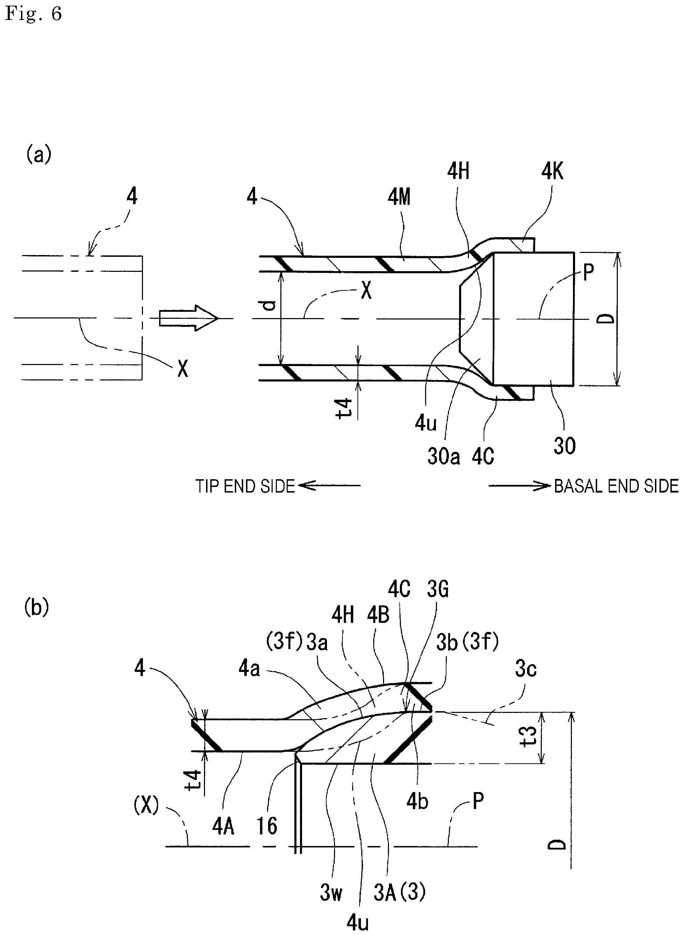

As shown in Fig. 1, namely, the whole of the tip-contracted outer-circumferential flared surface 3a of the inner ring body 3A is formed to have a diameter which, when the tube end portion 4C is flared and deformed to the radial-direction dimension (in a state where only the maximum-diameter portion 3b exists) of the maximum-diameter portion 3b of the flared portion 3f of the inner ring body 3A, is larger than a natural tip-contracted inner circumferential flared surface 4u [the reference numeral 4u is shown in Fig. 6(a)] that appears at this time, and that is in the inner circumferential portion of the tube end portion 4C, and into a convex curved surface, and configured so as to press-contact the tip-contracted outer-circumferential flared surface 3a with the inner circumferential portion of the tube end portion 4C.

The natural tip-contracted inner circumferential flared surface 4u, and the tip-contracted outer-circumferential flared surface 3a which is larger in diameter than the tip-contracted inner circumferential flared surface 4u, and which is formed into a convex curved surface will be described with further reference to Figs. 6(a) and 6(b).

In a column 30 shown in Fig. 6(a) and having a truncated conical portion 30a, the outer diameter D is formed to be equal to the diameter of the maximum-diameter portion 3b of the inner ring body 3A. The column 30 is press-inserted from the truncated conical portion 30a into the tube end portion 4C which is not flared and deformed to have the inner diameter d, and which has the axis X, thereby flaring and deforming the tube end portion 4C. This causes the natural tip-contracted inner circumferential flared surface 4u to be formed between a flared portion 4K of the tube 4 and a diameter portion 4M of the tube 4 which is not flared and deformed.

Usually, the shape and dimensions of the natural tip-contracted inner circumferential flared surface 4u are varied depending on differences in material, thickness t4, flare amount [(D - d)/2], and the like of the tube 4. Each time when one of the material, thickness t4, and flare amount of the tube 4 is made different, the characteristics (shape and dimensions) of the tube are changed.

By contrast to the natural tip-contracted inner circumferential flared surface 4u, as shown in Fig. 6(b), the tip-contracted outer-circumferential flared surface 3a of the inner ring body 3A is formed into a curved surface in which the outline as seen in a section of the flared portion 3f taken along a plane extending along the axis P (axis X) is convex toward the radially outward side, i.e., a convex curved surface. The surface of the convex curved surface is a spherical surface which is the surface of a sphere, an elliptical spherical surface which is the surface of an elliptical sphere, or the like. The dimension of the outer diameter of the convex curved surface, i.e., that of the diameter of the tip-contracted outer-circumferential flared surface 3a is formed larger in all the directions of the axis P than that of the natural tip-contracted inner circumferential flared surface 4u. In Fig. 6(b), t3 indicates the thickness of the inner ring 3 in the maximum-diameter portion 3b.

Because of the existence of the tip-end press-contact portion, a wide range of the tip-contracted outer-circumferential flared surface 3a of the inner ring 3 is in contact with the inner circumferential portion of the tube end portion 4C, and a press-contact portion which is so wide as to extend over the whole of the tip-contracted outer-circumferential flared surface 3a of the inner ring 3 can be formed between the tip-contracted outer-circumferential flared surface 3a of the inner ring 3 and the inner circumferential portion of the tube 4.

Therefore, a further effect is attained in which, even when the inner ring 3 is press-inserted into the tube 4 while being somewhat inclined to each other, the press-contact portion which is formed between the tube end portion 4C and the tip-contracted outer-circumferential flared surface 3a of the inner ring 3 is not interrupted, and a substantially whole of the portion in the circumferential direction is surely press-contacted, whereby a situation where the fluid penetrates therebetween from the tip end side of the tip-contracted outer-circumferential flared surface 3a can be effectively prevented from occurring.

In the pipe-connecting device A of the embodiment, the tip-contracted outer-circumferential flared surface 3a of the inner ring body 3A is formed as a spherical convex curved surface so as to be relatively largely convex, and, because of the elasticity of the resin, the shape of a natural flared deformed portion 4H of the tube 4 is usually formed into a shape such as shown in Fig. 6(b) (a shape which is flared in a convex curved surface-like manner, as seen from the inner side of the tube). Therefore, the press contact force between the tip-contracted outer-circumferential flared surface 3a and the tip-contracted press contact portion 4a is set so that the force is larger as, advancing from a position of the tube end portion 4C which is in contact with the maximum-diameter portion 3b of the inner ring 3, in the direction of the axis P of the convex curved surface along the inner circumference of the tube, further approaching the intermediate value of the flare amount [(D - d)/2]. The convex curved surface constituting the tip-contracted outer-circumferential flared surface 3a of the inner ring body 3A is not limited to a spherical surface, and may be a smooth convex curved surface such as a catenary curved surface.

Even in the case where the natural flared deformed portion 4H is flared in a concave curved surface-like manner or in a linear manner, therefore, the tip-contracted outer-circumferential flared surface 3a and the tip-contracted press-contact portion 4a can be set to a press-contact state without increasing the dimension of the tip-contracted outer-circumferential flared surface 3a in the direction of the axis P.

Next, the pressing structure due to the union nut 2 in the first seal portion S1 will be described.

As described above, the tube pressing portion 12b which clamps and presses the tube 4 with the tip-contracted outer-circumferential flared surface 3a of the union nut 2 is formed into the inclined inner circumferential surface which is inclined in the same direction as the tip-contracted outer-circumferential flared surface 3a with respect to the axis Y of the tubular screwing portion 1A.

More specifically, the pressing angle θ which is the angle of the inclined inner circumferential surface 12b with respect to the axis Y (axis Q in Fig. 3) is set to be larger than a pressure receiving angle α which is the angle of the tip-contracted outer-circumferential flared surface 3a with respect the axis Y (axis P in Fig. 2) (θ > α). The minimum diameter r of the inclined inner circumferential surface 12b is set to be equal to or larger than the minimum diameter n of a press fitting portion M between the tip-contracted outer-circumferential flared surface 3a and the tube 4 (r ≥ n). In order to obtain a more satisfactory seal performance, it is preferred that the minimum diameter r of the inclined inner circumferential surface 12b and the minimum diameter n of the press fitting portion M are equal to each other.

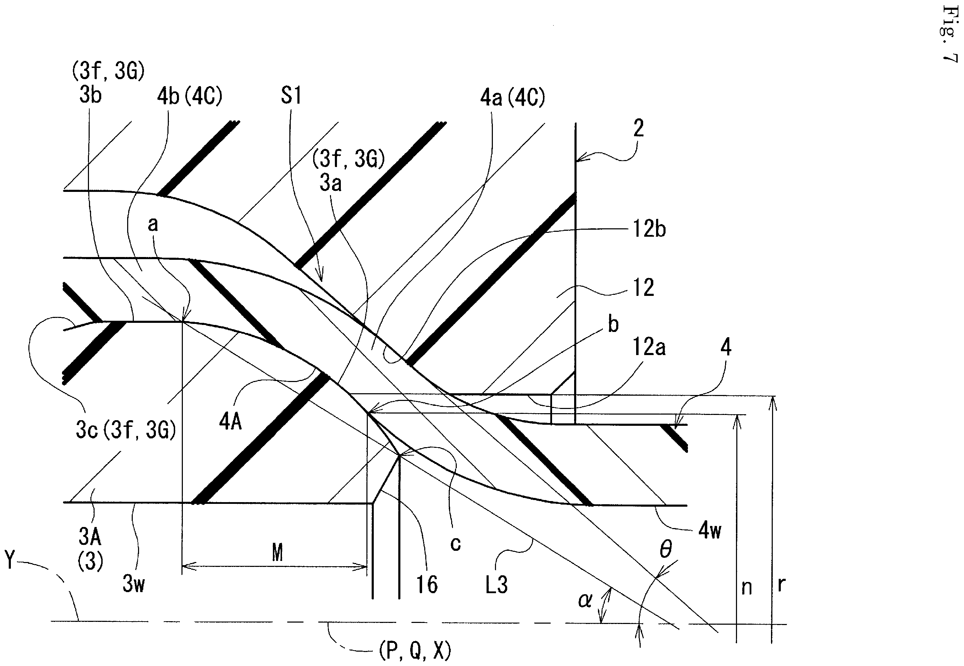

In Fig. 7, the place where the tube end portion 4C and the tip-contracted outer-circumferential flared surface 3a are press-contacted with each other, i.e., the portion where the both components 4C, 3a are in close contact with each other is defined as the press fitting portion M, the place where the press fitting portion M has the maximum diameter is referred to as a point a, the place where the portion has the minimum diameter is referred to as a point b, and the place where the tip-contracted outer-circumferential flared surface 3a has the minimum diameter (the boundary point with respect to the deformation preventing portion 16) is referred to as a point c. The pressure receiving angle α is an angle formed by a straight line L3 connecting the points a, c and the axis Y (axis P in Fig. 2), i.e., the average angle of the tip-contracted outer-circumferential flared surface 3a. Although not illustrated, the pressing angle θ is naturally larger than an angle formed by a straight line connecting the points a, b and the axis Y (axis P in Fig. 2).

A diameter related to the axis Y (axis Q in Fig. 3) of the inner circumferential surface 12a of the flange portion 12, i.e., the minimum diameter r of the inclined inner circumferential surface 12b is set to be equal to or larger than a diameter related to the axis Y (axis Q in Fig. 3) of the point b, i.e., the minimum diameter n of the press fitting portion M (r ≥ n).

In the tip-end press-contact portion, by fastening (screw advancement) caused by turning of the union nut 2, the inclined inner circumferential surface 12b is caused to press in the direction of the axis Y the tip-contracted press-contact portion 4a which is press-contacted with and fitted onto the tip-contracted outer-circumferential flared surface 3a. In this configuration, the tube 4 is pressed by a wide surface. Therefore, the pressure (surface pressure) of the portion which presses the tube 4 can be explicitly reduced as compared with the conventional structure where pressing is performed by a pointed edge (see "pressing edge 3C" in Figs. 1 and 2 of Patent Literature 1). Consequently, it is possible to reduce the creep phenomenon.

In summary, the seal performance and the security against the slipping off of the tube are not impaired, and a strong fastening work is not required. Therefore, the workability is largely improved, and the deformation can be suppressed to the minimum level (or as far as possible), whereby the life of a product can be prolonged.

According to the pipe-connecting device A of Embodiment 1, because of the above-described configuration of the tip-end press-contact portion, the tip-contracted outer-circumferential flared surface 3a of the inner ring 3 and the tube end portion 4C are already in close contact with each other prior to fastening of the union nut 2. Even when the pressing force applied by the union nut 2 is weaker than that in the prior art, therefore, sufficient seal and tube slipping-off preventing performances are obtained in the first seal portion S1. Consequently, the deformation of the tube end portion 4C due to pressing can be reduced (minimized).

According to the pipe-connecting device A of Embodiment 1, the pressing angle θ is set to be larger than the pressure receiving angle α. In the portion which is in the tip-contracted press-contact portion 4a, and which is pressed by the inclined inner circumferential surface 12b, therefore, the amount of compression is further increased as closer to the side opposite to the pipe joint body 1 in the direction of the axis Y (axis X), whereby a wedge action is produced, and the effect of preventing the tube 4 from slipping off can be further enhanced.

When a pulling force in the direction of extracting the tube 4 from the pipe joint body 1 acts on the tube, namely, the tube 4 is more strongly clamped between the inner ring 3 which is conjointly pulled, and the inclined inner circumferential surface 12b. In the tube 4, therefore, a wedge action is produced also in the pulling direction.

The minimum diameter r of the inclined inner circumferential surface 12b is set to be equal to or larger than the minimum diameter n of the press fitting portion M which is the portion where the tip-contracted outer-circumferential flared surface 3a and the tube 4 are in close contact with each other. Therefore, a wasted operation of pressing a portion where the tip-contracted outer-circumferential flared surface 3a and the tube end portion 4C are not in close contact with each other, i.e., an unnecessary pressing force is not applied. The fastening by the union nut 2 can be efficiently performed. In other words, the union nut 2 can be fastened by a force which is smaller than that in the prior art.

In this case, when a configuration where θ > α and r ≥ n is employed, in the portion of the inclined inner circumferential surface 12b which is caused to press the tube end portion 4C by screw advancement of the union nut 2, the part which applies the strongest pressing force is in the vicinity of or in the minimum-diameter portion of the inclined inner circumferential surface 12b in the press fitting portion M. Therefore, there is an advantage that the effect of preventing slipping off of the tube 4 by the wedge action, and that of reducing the force of fastening the union nut 2 are synergistically enhanced.

In addition, the second seal portion S2 is formed by press contact between the seal element portion y which is formed in the basal end side of the inner ring 3, and the seal forming portion k which is disposed in the pipe joint body 1, and the first and second seal portions S1, S2 provide a sufficient seal performance.

Moreover, the pipe-connecting device A of the invention is configured so that, in the assembled state, the tip-expanded inner circumferential surface 8 of the pipe joint body 1 and the diameter-contracted tube portion 4c of the tube 4 are not butted or very lightly butted even when they are butted against each other, and the first seal portion S1 and the second seal portion S2 surely function.

That is, the first seal portion S1 blocks the fluid from oozing between the tip-contracted outer-circumferential flared surface 3a of the inner ring 3 and the tube 4, and the second seal portion S2 blocks the fluid from oozing between the fitting tubular portion 3B of the inner ring 3, and the small-diameter tubular portion 1a and annular groove m of the pipe joint body 1. When the first and second seal portions S1, S2 surely function, oozing of the fluid between the inner ring 3 and the tubular screwing portion 1A, the inner ring 3 and the tube end portion 4C, and the tubular screwing portion 1A and the tube end portion 4C does not occur.

If, in the assembled state, the diameter-contracted tube portion 4c and the tip-expanded inner circumferential surface 8 are press-contacted with each other to impart the sealing function to the press-contact portion, the pressing force due to the fastening of the union nut 2 is scattered, the press contact forces acting on the first seal portion S1 and the second seal portion S2 are correspondingly reduced, and there is a possibility that the sealing force of the entire pipe-connecting device may be reduced.

In the pipe-connecting device A of the invention, however, the diameter-contracted tube portion 4c and the tip-expanded inner circumferential surface 8 are not press-contacted with each other in the assembled state, and therefore the press contact force acts concentrically on the first seal portion S1 and the second seal portion S2, with the result that the sealing force of the entire pipe-connecting device can be maximally exerted.

From the above, the pipe-connecting device A can be configured in which, in the assembled state, in the configuration where a gap can be formed between the diameter-contracted tube portion 4c and the tip-expanded inner circumferential surface 8, or that where the elements are hit each other at a degree by which a press contact force is not produced, the first and second seal portions S1, S2 can function more surely and a more perfect seal is attained than in the configuration where the two elements 4c, 8 are butted against each other.

The tube pressing portion 12b of the union nut 2 is configured as a tapered surface as described above, or alternatively may be configured as an arcuate surface which forms a surface contact along the outer circumferential surface of the tip-contracted press contact portion 4a in the tube end portion 4C that covers the tip-contracted outer-circumferential flared surface 3a of the inner ring 3.

### [Embodiment 2, not forming part of the invention]

As shown in Fig. 5, a pipe-connecting device A of Embodiment 2 is different from the pipe-connecting device A of Embodiment 1 only in the configurations of the first seal portion S1 and the second seal portion S2.

In the first seal portion S1, the tube pressing portion 12b of the union nut 2, i.e., the inclined inner circumferential surface 12b and the tip-contracted outer-circumferential flared surface 3a are formed into a surface (conical surface) which is inclined by straight lines having the same angle with respect to the axis Y. Namely, the tip-contracted outer-circumferential flared surface 3a is changed from the three-dimensional curved surface in Embodiment 1 to a conical surface (two-dimensional curved surface) which is inclined at the pressure receiving angle α with respect to the axis Y, and the pressing angle θ of the inclined inner circumferential surface 12b is set to a value which is equal to the pressure receiving angle α. The pressing angle θ and the pressure receiving angle α may have different values, and it is more preferable that the pressing angle θ has a value which is slightly larger than the pressure receiving angle α.

The second seal portion S2 will be described. In the fitting tubular portion 3B of the inner ring 3, the outer circumferential surface 3e, the inner circumferential portion 3w, and a tip-contracted inclined inner circumferential surface 20 which is in the basal end surface, and in which the diameter is further contracted as further advancing toward the tip end side of the inner ring 3 are formed.

In the pipe joint body 1, by contrast, the tip-contracted small-diameter tubular portion 1a having a tapered outer circumferential surface 18 in which the diameter is further reduced as advancing toward the tip end of the pipe joint body 1 is formed on the radially inward side of the root portion (basal end side) of the tubular screwing portion 1A. A tip-expanded annular groove 19 into which the basal end portion of the fitting tubular portion 3B is to be fitted is formed between the tapered outer circumferential surface 18 of the small-diameter tubular portion 1a and the inner circumferential surface 9 of the tubular screwing portion 1A.

In the tip end portion of the small-diameter tubular portion 1a, the tip end side of the small-diameter tubular portion 1a is deformed and projected in the radial inward direction (toward the fluid path), thereby forming a cut-shaped deformation preventing portion 21 for preventing the fluid from entering and staying.

The assembly situation of the pipe-connecting device A of Embodiment 2 is as follows. The union nut 2 is screwed and advanced by fastening to the tubular screwing portion 1A of the pipe joint body 1, and the tube pressing portion 12b of the union nut 2, specifically, the inclined inner circumferential surface 12b presses the tip-end side outer circumferential surface (outer circumferential surface of the tip-contracted press-contact portion 4a) of the tube end portion 4C which is press-fitted onto the tip-contracted outer-circumferential flared surface 3a, in the direction of the axis Y.

Therefore, the basal end portion of the fitting tubular portion 3B of the inner ring 3 is press-inserted into the annular groove 19 of the pipe joint body 1, and the tip-contracted tapered outer circumferential surface 18 (an example of the seal forming portion k) of the pipe joint body 1 and the tip-contracted inclined inner circumferential surface 20 (an example of the seal element portion y) of the inner ring 3 to be butted against and press-contacted with each other, and the second seal portion S2 is formed.

In order to enable the inclined inner circumferential surface 20 of the fitting tubular portion 3B to butt against the tapered outer circumferential surface 18 of the annular groove 19 so that the second seal portion S2 can regularly function, it is preferred that the end surface of the basal end side of the fitting tubular portion 3B is formed into a cut-shaped butting avoiding portion 25 which separates from the annular groove 19 in the direction of the axis Y.

When a pulling force in the direction of extracting the tube 4 from the pipe joint body 1 acts on the tube, in the second seal portion S2 in Embodiment 2, the tip-contracted inclined inner circumferential surface 20 and the tip-contracted tapered outer circumferential surface 18 separate from each other, and there is a possibility that the sealing function is lowered or deactivated. By contrast, the second seal portion S2 in Embodiment 1 having the outer circumference-side press-insertion seal portion as configured by the projecting cylindrical portion 14 and the annular groove m is advantageous in that, even when the projecting cylindrical portion 14 is somewhat pulled and moved in conjunction with the pulled movement of the tube 4, the press fitting state of the annular groove m and the projecting cylindrical portion 14 is maintained, and therefore the sealing function is ensured.

The connection structure of the tube 4 and the pipe joint body 1 by using the inner ring 3 in the pipe-connecting device A of Embodiment 2 is similar to the configuration of the pipe-connecting device A of Embodiment 1 shown in Fig. 1 except the configurations of the first seal portion S1 and the second seal portion S2. Therefore, the portions which correspond to each other in Embodiment 1 and Embodiment 2 are denoted by the same reference numerals used in Fig. 1, also in Fig. 5, and their description is omitted.

In the pipe-connecting device A of Embodiment 2, the configuration of the second seal portion S2 may be identical with that of the second seal portion S2 in the pipe-connecting device A of Embodiment 1, and only the configuration of the first seal portion S1 may be different from that of the pipe-connecting device A of Embodiment 1.

### [Embodiment 3]

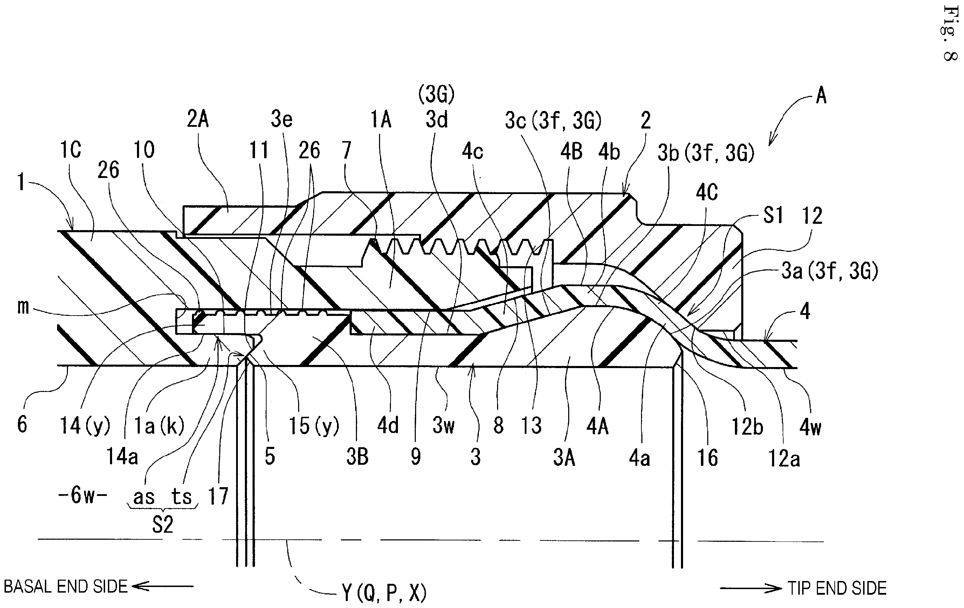

As shown in Fig. 8, a pipe-connecting device A of Embodiment 3 is different from the pipe-connecting device A of Embodiment 1 only in the configuration of the fitting tubular portion 3B of the inner ring 3.

That is, the outer circumferential surface 3e of the fitting tubular portion 3B is slightly smaller in diameter than the inner circumferential surface 9 of the tubular screwing portion 1A, and a plurality of annular ridges 26 which project in a ring-like manner from the outer circumferential surface 3e toward the radially outward side are formed in a manner in which they are separated from each other in the direction of the axis Y. The others are identical with those of the pipe-connecting device of Embodiment 1. In this case, the plurality of annular ridges 26 and the inner circumferential surface 9 are press-contacted with each other, and the sealing function can be exerted in each of the annular ridges 26.

### [Embodiment 4]

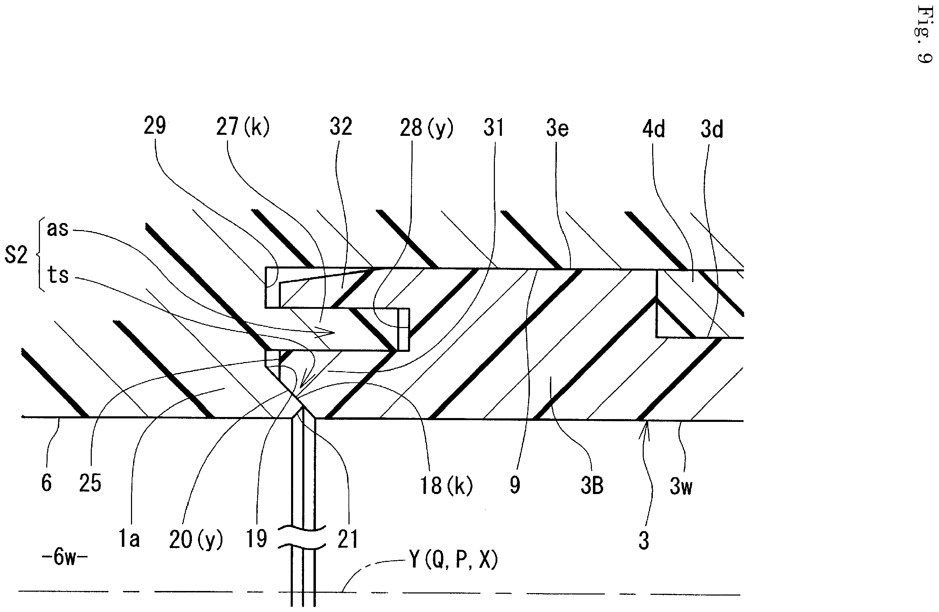

As shown in Fig. 9, a pipe-connecting device A of Embodiment 4 is different from the pipe-connecting device A of Embodiment 1 only in a fitting structure between the basal end portion of the inner ring 3 and the pipe joint body 1.

As shown in Fig. 9, an outer circumferential groove 29 which is recessed toward the basal end side in the direction of the axis Y, a cylindrical part 27 which projects on the radially inward side of the outer circumferential groove 29 toward the tip end side in the direction of the axis Y, and the small-diameter tubular portion 1a which is formed on the radially inward side of the cylindrical part 27 are formed in the pipe joint body 1.

An outer circumferential cylindrical portion 32 which is fitted into the outer circumferential groove 29, an annular groove portion 28 into which the cylindrical part 27 is fitted, and a small-diameter cylindrical portion 31 including the tip-contracted inclined inner circumferential surface 20 which is press-contacted with the tip-contracted tapered outer circumferential surface 18 formed on the small-diameter tubular portion 1a are formed in the basal end portion of the inner ring 3.

That is, the press-insertion seal portion as on the side of the outer circumference is formed by the seal element portion y which is the annular groove portion 28, and the seal forming portion k which is the cylindrical portion 27, and the butt seal portion ts on the side of the inner circumference is formed by the seal element portion y which is the tip-contracted inclined inner circumferential surface 20, and the seal forming portion k which is the tip-contracted tapered outer circumferential surface 18. The second seal portion S2 is configured by the press-insertion seal portion as on the side of the outer circumference, and the butt seal portion ts on the side of the inner circumference.

The portions constituting the seal element portion y in the pipe joint body 1, and those constituting the seal forming portion k in the inner ring 3 may be formed in the respective opposite members. Namely, the outer circumferential cylindrical portion, the annular groove portion, and the small-diameter tubular portion may be formed in the side of the pipe joint body 1, and the outer circumferential groove, the cylindrical part, and the small-diameter tubular portion may be formed in the side of the inner ring 3.

The configuration other than the second seal portion S2 is identical with that of the pipe-connecting device A of Embodiment 1 shown in Fig. 1, and therefore Fig. 9 shows only main portions.

### [Other embodiments]

It is assumed that the fluid transfer tube 4 which is a sealing object in the pipe-connecting device A includes a tube-like portion (tubular screwing portion 1A) that is projected from another pipe joint body, or a fluid apparatus such as a pump or a valve. In the pipe-connecting device A of the invention, a fluid apparatus 1 may be used as a component element in place of the pipe joint body 1. Namely, the apparatus may be a pump, a valve, or the like in which the tubular screwing portion 1A is integrated with a case. Such a pump, a valve, and the like are generally defined as the fluid apparatus 1.

In Figs. 1, 5, and 8, the pipe joint body 1 has the configuration where it includes the tip-expanded inner circumferential surface 8 of the dimension setting in which, in the assembled state, a gap is formed with respect to the diameter-contracted tube portion 4c. Alternatively, the pipe joint body may have a configuration where it has the tip-expanded inner circumferential surface 8 which is lightly contacted with the diameter-contracted tube portion 4c.

### Description of Reference Numerals

1 pipe joint body (fluid apparatus)
1A tubular screwing portion
2 union nut
3 inner ring
3G outer circumferential portion
3a tip-contracted outer-circumferential flared surface
3c base-contracted diameter-contracted outer circumferential surface
3w inner circumferential portion
4 tube
4C tube end portion
4c diameter-contracted tube portion
5 inclined inner circumferential surface (tapered inner circumferential surface)
7 external thread
8 tip-expanded inner circumferential surface (tip-end inner circumferential surface)
11 inclined outer circumferential surface
12b tube pressing portion (inclined inner circumferential surface)
13 internal thread
18 tapered outer circumferential surface
20 inclined inner circumferential surface
27 cylindrical part
28 annular groove portion
Y axis (axis of tubular screwing portion 1A)
m annular groove
k seal forming portion
y seal element portion

## Claims

1. A pipe-connecting device in which the device includes:
an inner ring (3) having: an outer circumferential portion (3G) in which a tip-contracted outer-circumferential flared surface (3a) that is insertable from a tip end into a tube end portion (4C) of a fluid transfer tube (4) made of a resin to flare the tube end portion (4C) is formed at a tip end; and an inner circumferential portion (3w) constituting a fluid transfer path;
a pipe joint body (1) or fluid apparatus that has a tubular screwing portion (1A) in which an external thread (7) is formed on an outer circumference; and
a union nut (2) in which an internal thread (13) that is to be screwed with the external thread (7) is formed,
the inner ring (3) being insertable into the tubular screwing portion (1A) in a state where the tube end portion (4C) is flared, and the tip-contracted outer-circumferential flared surface (3a) is pressable against the union nut (2) which is screwable with the external thread (7), with the tube (4) clamped, the pipe-connecting device being connectable to the tube (4),
**characterized in that**
a tube pressing portion (12b) which is in the union nut (2), configured to press the tube (4) against the tip-contracted outer-circumferential flared surface (3a) is formed into an inclined inner circumferential surface which is inclined in a same direction as the tip-contracted outer-circumferential flared surface (3a) with respect to an axis (Y) of the tubular screwing portion (1A), and
the tip-contracted outer-circumferential flared surface (3a) forms a convex curved surface in which the whole is convex radially and outwardly in an axis (P) direction of the inner ring (3), as a press-contact portion configured to make the tip-contracted outer-circumferential flared surface (3a) be in contact with the inner circumferential portion of the tube end portion (4C), prior to fastening of the union nut (2), between the tip-contracted outer-circumferential flared surface (3a) and the inner circumferential portion of the tube end portion (4C), wherein
an angle (θ) of the inclined inner circumferential surface with respect to the axis (Y) is set to be larger than an angle (α) formed by a straight line (L3) connecting a place (a) where the pressing fitting portion (M), in which the tip-contracted outer-circumferential flared surface (3a) is configured to be in close contact with the tube end portion (4C), has the maximum diameter and a place (c) where the tip-contracted outer-circumferential flared surface (3a) has the minimum diameter, and the axis (Y).

2. The pipe-connecting device according to claim 1, wherein the outer circumferential portion (3G) of the inner ring (3) includes a base-contracted diameter-contracted outer circumferential surface (3c) which is formed in a place that is on a side of a basal end with respect to the tip-contracted outer-circumferential flared surface (3a), in order to diameter-contract the tube end portion (4C) which is flared by the tip-contracted outer-circumferential flared surface (3a), a seal element portion (y) is formed in a basal end portion of the inner ring (3), a seal forming portion (k) corresponding to the seal element portion (y) is formed in the pipe joint body (1) or the fluid apparatus, and,
in an assembled state in which the tube pressing portion (12b) is pressed against the tip-contracted outer-circumferential flared surface (3a) through the tube (4) by screw advancement of the tubular screwing portion (1A) of the union nut (2) in a direction of the axis (Y), the screw advancement being caused by screwing the internal thread (13) with the external thread (7) in a state where the inner ring (3) in which the tube end portion (4C) is fitted onto the tip-contracted outer-circumferential flared surface (3a) and the base-contracted diameter-contracted outer circumferential surface (3c) is inserted into the tubular screwing portion (1A), the seal element portion (y) and the seal forming portion (k) are pressed against each other, and a diameter-contracted tube portion (4c) which is in the tube end portion (4C), and which is fitted onto the base-contracted diameter-contracted outer circumferential surface (3c), and the tubular screwing portion (1A) are pressed against each other by a contact pressure which is lower than a contact pressure between the seal element portion (y) and the seal forming portion (k), or separated from each other.

3. The pipe-connecting device according to claim 2, wherein a tip-end inner circumferential surface (8) which is in the tubular screwing portion (1A), and which is opposed to the diameter-contracted tube portion (4c) is formed into a tip-expanded inner circumferential surface in which a uniform or substantially uniform gap is formed between the tip-end inner circumferential surface (8) and an outer circumferential surface of the diameter-contracted tube portion (4c).

4. The pipe-connecting device according to claim 2, wherein the seal forming portion (k) includes a tapered outer circumferential surface (18) or tapered inner circumferential surface (5) which is inclined with respect to the axis (Y), and the seal element portion (y) includes an inclined inner circumferential surface (20) which is fitted onto the tapered outer circumferential surface (18), or an inclined outer circumferential surface (11) which is fitted into the tapered inner circumferential surface (5).

5. The pipe-connecting device according to claim 2, wherein the seal forming portion (k) includes an annular groove (m) or/and cylindrical part (27) which is formed in parallel to the axis (Y), and the seal element portion (y) includes a cylindrical portion (14) that is press-inserted into the annular groove (m), or/and an annular groove portion (28) into which the cylindrical part (27) is press-inserted.

## Patentansprüche

1. Rohrverbindungsvorrichtung, wobei die Vorrichtung aufweist:
einen inneren Ring (3) mit: einem Außenumfangsabschnitt (3G), in dem eine an der Spitze verengte, am Außenumfang aufgeweitete Oberfläche (3a) die von einem Spitzenende in einen Röhrenendabschnitt (4C) einer aus einem Harz hergestellten Fluidübertragungsröhre (4) einführbar ist, um den Röhrenendabschnitt (4C) aufzuweiten, an einem Spitzenende gebildet ist; und einem Innenumfangsabschnitt (3w), der einen Fluidübertragungsweg bildet;
einen Rohrverbinderkörper (1) oder eine Fluideinrichtung, der beziehungsweise die einen röhrenförmigen Schraubabschnitt (1A) hat, in dem ein Außengewinde (7) auf einem Außenumfang gebildet ist; und
eine Überwurfmutter (2), in der ein Innengewinde (13) gebildet ist, das mit dem Außengewinde (7) verschraubbar ist,
wobei der innere Ring (3) in den röhrenförmigen Schraubabschnitt (1A) in einem Zustand einführbar ist, in dem der Röhrenendabschnitt (4C) aufgeweitet ist, und die an der Spitze verengte, am Außenumfang aufgeweitete Oberfläche (3a) gegen die Überwurfmutter (2) pressbar ist, die mit dem Außengewinde (7) verschraubbar ist, wobei die Röhre (4) eingeklemmt ist, wobei die Rohrverbindungsvorrichtung mit der Röhre (4) verbindbar ist,
**dadurch gekennzeichnet, dass**
ein Röhrenpressabschnitt (12b), der in der Überwurfmutter (2) liegt und dazu ausgebildet ist, die Röhre (4) gegen die an der Spitze verengte, am Außenumfang aufgeweitete Oberfläche (3a) zu pressen, zu einer geneigten Innenumfangsoberfläche gebildet ist, die in Bezug auf eine Achse (Y) des röhrenförmigen Schraubabschnitts (1A) in einer gleichen Richtung wie die an der Spitze verengte, am Außenumfang aufgeweitete Oberfläche (3a) geneigt ist, und
die an der Spitze verengte, am Außenumfang aufgeweitete Oberfläche (3a) eine konvexe gekrümmte Oberfläche, in der die Gesamtheit in einer Richtung der Achse (P) des inneren Rings (3) radial und nach außen konvex ist, als einen Druckkontaktabschnitt bildet, der zum Bewirken dessen ausgebildet ist, dass die an der Spitze verengte, am Außenumfang aufgeweitete Oberfläche (3a) mit dem Innenumfangsabschnitt des Röhrenendabschnitts (4C) vor dem Festziehen der Überwurfmutter (2), zwischen der an der Spitze verengten, am Außenumfang aufgeweiteten Oberfläche (3a) und dem Innenumfangsabschnitt des Röhrenendabschnitts (4C) in Kontakt steht, wobei ein Winkel (θ) der geneigten innenumfangsoberfläche in Bezug auf die Achse (Y) größer gewählt ist als ein Winkel (α), der gebildet ist durch eine Gerade (L3), die eine Stelle (a), wo der Presspassungsabschnitt (M), in dem die an der Spitze verengte, am Außenumfang aufgeweitete Oberfläche (3a) dazu ausgebildet ist, mit dem Röhrenendabschnitt (4C) in engem Kontakt zu stehen, den maximalen Durchmesser hat, und eine Stelle (c), wo die an der Spitze verengte, am Außenumfang aufgeweitete Oberfläche (3a) den minimalen Durchmesser hat, verbindet, und der Achse (Y).

2. Rohrverbindungsvorrichtung gemäß Anspruch 1, bei der der Außenumfangsabschnitt (3G) des inneren Rings (3) eine an der Basis verengte, im Durchmesser verengte Außenumfangsoberfläche (3c) aufweist, die an einer Stelle gebildet ist, welche auf einer Seite eines Basis-Endes in Bezug auf die an der Spitze verengte, am Außenumfang aufgeweitete Oberfläche (3a) liegt, um den Röhrenendabschnitt (4C), der durch die an der Spitze verengte, am Außenumfang aufgeweitete Oberfläche (3a) aufgeweitet ist, im Durchmesser zu verengen,
ein Dichtungselementabschnitt (y) in einem Basis-Endabschnitt des inneren Rings (3) gebildet ist, ein Dichtungsbildungsabschnitt (k), der dem Dichtungselementabschnitt (y) entspricht, in dem Rohrverbinderkörper (1) oder der Fluideinrichtung gebildet ist und
in einem montierten Zustand, in dem der Röhrenpressabschnitt (12b) durch Vorschrauben des röhrenförmigen Schraubabschnitts (1A) der Überwurfmutter (2) in einer Richtung der Achse (Y) durch die Röhre (4) gegen die an der Spitze verengte, am Außenumfang aufgeweitete Oberfläche (3a) gepresst ist, wobei das Vorschrauben durch Verschrauben des Innengewindes (13) mit dem Außengewinde (7) bewirkt ist, in einem Zustand, in dem der innere Ring (3), in welchem der Röhrenendabschnitt (4C) auf die an der Spitze verengte, am Außenumfang aufgeweitete Oberfläche (3a) gepasst ist und die an der Basis verengte, im Durchmesser verengte Außenumfangsoberfläche (3c) in den röhrenförmigen Schraubabschnitt (1A) eingeführt ist, der Dichtungselementabschnitt (y) und der Dichtungsbildungsabschnitt (k) gegeneinander gepresst sind, und ein im Durchmesser verengter Röhrenabschnitt (4c), der in dem Röhrenendabschnitt (4C) liegt, und der auf die an der Basis verengte, im Durchmesser verengte Außenumfangsoberfläche (3c) gepasst ist, und der röhrenförmige Schraubabschnitt (1A) durch einen Kontaktdruck, der niedriger als ein Kontaktdruck zwischen dem Dichtungselementabschnitt (y) und dem Dichtungsbildungsabschnitt (k) ist, gegeneinander gepresst sind oder voneinander getrennt sind.

3. Rohrverbindungsvorrichtung gemäß Anspruch 2, bei der eine Spitzenende-Innenumfangsoberfläche (8), die in dem röhrenförmigen Schraubabschnitt (1A) liegt, und die zu dem im Durchmesser verengten Röhrenabschnitt (4c) entgegengesetzt ist, zu einer an der Spitze erweiterten Innenumfangsoberfläche gebildet ist, in der ein gleichmäßiger oder im Wesentlichen gleichmäßiger Abstand zwischen der Spitzenende-Innenumfangsoberfläche (8) und einer Außenumfangsoberfläche des im Durchmesser verengten Röhrenabschnitts (4c) gebildet ist.

4. Rohrverbindungsvorrichtung gemäß Anspruch 2, bei der der Dichtungsbildungsabschnitt (k) eine zulaufende Außenumfangsoberfläche (18) oder zulaufende Innenumfangsoberfläche (5) aufweist, die in Bezug auf die Achse (Y) geneigt ist, und der Dichtungselementabschnitt (y) eine geneigte Innenumfangsoberfläche (20), die auf die zulaufende Außenumfangsoberfläche (18) gepasst ist, oder eine geneigte Außenumfangsoberfläche (11), die auf die zulaufende Innenumfangsoberfläche (5) gepasst ist, aufweist.

5. Rohrverbindungsvorrichtung gemäß Anspruch 2, bei der der Dichtungsbildungsabschnitt (k) eine ringförmige Nut (m) oder/und einen zylindrischen Teil (27) aufweist, der beziehungsweise die parallel zu der Achse (Y) gebildet ist, und der Dichtungselementabschnitt (y) einen zylindrischen Abschnitt (14), der in die ringförmige Nut (m) eingepresst ist, oder/und einen ringförmigen Nutabschnitt (28), in den der zylindrische Teil (27) eingepresst ist, aufweist.

## Revendications

1. Dispositif de raccordement de tuyau, dans lequel le dispositif comporte :
une bague interne (3) possédant : une partie circonférentielle externe (3G) dans laquelle une surface circonférentielle externe évasée contractée sur l'embout (3a) qui est insérable à partir d'une extrémité d'embout dans une partie d'extrémité de tube (4C) d'un tube de transfert de fluide (4) fabriqué en une résine afin d'évaser la partie d'extrémité de tube (4C) qui est formée sur une extrémité d'embout ; et une partie circonférentielle interne (3w) constituant une voie de transfert de fluide ;
un corps de jonction de tuyau ou un appareil à fluide (1) qui possède une partie de vissage tubulaire (1A) dans laquelle un filetage externe (7) est formé sur une circonférence externe; et
un écrou de raccordement (2) dans lequel est formé un filetage interne (13) qui est destiné à être vissé avec le filetage externe (7),
la bague interne (3) étant insérable dans la partie de vissage tubulaire (1A) dans un état où la partie d'extrémité de tube (4C) est évasée, et la surface circonférentielle externe évasée contractée sur l'embout (3a) est compressible contre l'écrou de raccordement (2) qui est vissable avec le filetage externe (7), avec le tube (4) serré, le dispositif de raccordement de tuyau étant raccordable au tube (4),
**caractérisé en ce**
**qu'**une partie de compression de tube (12b) qui est dans l'écrou de raccordement (2), configurée pour comprimer le tube (4) contre la surface circonférentielle externe évasée contractée sur l'embout (3a) est formée dans une surface circonférentielle interne inclinée qui est inclinée dans la même direction que la surface circonférentielle externe évasée contractée sur l'embout (3a) par rapport à un axe (Y) de la partie de vissage tubulaire (1A), et
la surface circonférentielle externe évasée contractée sur l'embout (3a) forme une surface convexe incurvée dans laquelle le tout est convexe radialement et vers l'extérieur dans une direction d'axe (P) de la bague interne (3), comme une partie en contact de compression configurée afin de faire être en contact la surface circonférentielle externe évasée contractée sur l'embout (3a) avec la contact avec la partie circonférentielle interne de la partie d'extrémité de tube (4C), avant la fixation de l'écrou de raccordement (2) entre la surface circonférentielle externe évasée contractée sur l'embout (3a) et la partie circonférentielle interne de la partie d'extrémité de tube (4C), dans lequel
un angle (θ) de la surface circonférentielle interne inclinée par rapport à l'axe (Y) est défini pour être plus large qu'un angle (α) formé par une ligne droite (L3) reliant un emplacement (a) où la partie de raccordement par compression (M), dans laquelle la surface circonférentielle externe évasée contractée sur l'embout (3a) est configurée afin d'être en contact étroit avec la partie d'extrémité de tube (4C), possède le diamètre maximum et un emplacement (c) où la surface circonférentielle externe évasée contractée sur l'embout (3a) possède le diamètre minimum, et l'axe (Y).

2. Dispositif de raccordement de tuyau selon la revendication 1, dans lequel la partie circonférentielle externe (3G) de la bague interne (3) comporte une surface circonférentielle externe évasée contractée à la base et contractée sur le diamètre (3c) qui est formée dans un endroit qui est sur un côté d'une extrémité basale par rapport à la surface circonférentielle externe évasée contractée sur l'embout (3a), en vue de contracter sur le diamètre la partie d'extrémité de tube (4C), qui est évasée par la surface circonférentielle externe évasée contractée sur l'embout (3a),
une partie d'élément d'étanchéité (y) est formée dans une partie d'extrémité basale de la bague interne (3), une partie formant l'étanchéité (k) correspondant à la partie d'élément d'étanchéité (y) est formée dans le corps de jonction de tuyau (1) ou l'appareil à fluide, et,
dans un état assemblé, dans lequel la partie de compression de tube (12b) est comprimée contre la surface circonférentielle externe évasée contractée sur l'embout (3a) à travers le tube (4) par avancement de vis de la partie de vissage tubulaire (1A) de l'écrou de raccordement (2) dans une direction de l'axe (Y), l'avancement de vis étant occasionné en vissant le filetage interne (13) avec le filetage externe (7), dans un état dans lequel la bague interne (3) dans laquelle la partie d'extrémité de tube (4C) est montée sur la surface circonférentielle externe évasée contractée sur l'embout (3a) et la surface circonférentielle externe contractée à la base et contractée sur le diamètre (3c) est insérée dans la partie de vissage tubulaire (1A), la partie d'élément d'étanchéité (y) et la partie formant l'étanchéité (k) sont comprimées l'une contre l'autre, et une partie de tube contractée sur le diamètre (4c) qui est dans la partie d'extrémité de tube (4C), et qui est montée sur la surface circonférentielle externe contractée à la base et contractée sur le diamètre (3c), et la partie de vissage tubulaire (1A) sont comprimées l'une contre l'autre par une pression de contact qui est plus basse qu'une pression de contact entre la partie d'élément d'étanchéité (y) et la partie formant l'étanchéité (k) ou séparées l'une de l'autre.

3. Dispositif de raccordement de tuyau selon la revendication 2, dans lequel une surface circonférentielle interne étendue sur l'embout (8) qui est dans la partie de vissage tubulaire (1A) et qui est opposée à la partie de tube contractée sur le diamètre (4c) est formée dans une surface circonférentielle interne étendue sur l'embout, dans laquelle une distance uniforme ou principalement uniforme est formée entre la surface circonférentielle interne étendue sur l'embout (8) et une surface circonférentielle externe de la partie de tube contractée sur le diamètre (4c).

4. Dispositif de raccordement de tuyau selon la revendication 2, dans lequel la partie formant l'étanchéité (k) comporte une surface circonférentielle externe effilée (18) ou une surface circonférentielle interne effilée (5) qui est inclinée par rapport à l'axe (Y), et la partie d'élément d'étanchéité (y) comporte une surface circonférentielle interne inclinée (20), qui est montée sur la surface circonférentielle externe effilée (18), ou une surface circonférentielle externe inclinée (11) qui est montée dans la surface circonférentielle interne effilée (5).

5. Dispositif de raccordement de tuyau selon la revendication 2, dans lequel la partie formant l'étanchéité (k) comporte une cavité annulaire (m) et/ou une pièce cylindrique (27) qui est formée en parallèle à l'axe (Y), et la partie d'élément d'étanchéité (y) comporte une partie cylindrique (14) qui est insérée en appuyant dans la cavité annulaire (m) et/ou une partie de cavité annulaire (28) dans laquelle la partie cylindrique (27) est insérée en appuyant.
